# EUROPEAN PATENT SPECIFICATION

(11) **EP 0 385 195 B1**
(45) Date of publication and mention of the grant of the patent: **04.05.1994**
(21) Application number: 90102989.2
(22) Date of filing: 16.02.1990
(51) Int. Cl.: G21C 21/00, F27D 3/00, B65G 69/16, B65G 11/20, B65G 47/80

(54) **Nuclear fuel pellet transfer arrangement**
Vorrichtung zur Übergabe von Kernbrennstoffpellets
Dispositif pour le transfert de pastilles de combustible nucléaire

(30) Priority: 02.03.1989 US 318107
(43) Date of publication of application: 05.09.1990
(73) Proprietor: WESTINGHOUSE ELECTRIC CORPORATION, Pittsburgh Pennsylvania 15222 (US)
(72) Inventor: Huggins, Thomas Bourne, Sr., Columbia, South Carolina 29210 (US); Roberts, Elwyn, Columbia, South Carolina 29250 (US); Edmunds, Melvin Orlando, Hopkins, South Carolina 29061 (US)
(74) Representative: Gallo, Wolfgang, Dipl.-Ing. (FH)

(56) References cited:
- EP-A- 0 140 023
- EP-A- 0 300 246
- US-A- 3 034 626
- US-A- 4 332 120

## Description

The invention relates generally to the art of handling nuclear fuel pellets and, more particularly, to an apparatus for transferring nuclear fuel pellets from a pellet press into a sintering boat.

An operational step in the fabrication of nuclear fuel is the transferring of green fuel pellets from a pellet press into sintering containers, or "boats", in preparation to firing them at high temperatures in a sintering furnace. This operation requires careful handling of the pellets because in their "green" or unfired state they are fragile and susceptible to damage.

One known method of loading green fuel pellets from a pellet press into a sintering boat is to let them slide down a chute and into the boat. This results in considerable pellet-to-pellet impact and, hence, exposes the pellets to a relatively high risk of impact damage. Another known approach involves the use of mechanical transfer blades or jaws adapted to pick up a single row of fuel pellets at a time and to transfer it into the sintering boat to be loaded. Still another known technique is to lower a vacuum transfer head onto an array of fuel pellets, to apply a vacuum, and to lift up and transfer the whole array to the sintering boat, depositing it therein as a complete layer of pellets. There is also US-A-4 332 120 which discloses an arrangement for transferring fuel pellets from a rotary pellet- press table into a sintering boat via a turntable and a vertical chute, the green pellets being cammed from the rotating pellet-press table onto the rotating turntable and from the latter into an opening through which the pellets are allowed to fall into the vertical chute and, through the latter, into a sintering boat supported therebeneath on a platform which is spring-biased against the combined weight of the sintering boat and the pellets therein and gradually descends under said weight as the loading of pellets progresses. In order to slow the pellets' fall through the chute, the latter is provided interiorly with downwardly angled plates arranged to define a zig-zag path for the pellets to follow as they tumble down the chute. Finally, US-A-4 566 835 discloses a sintering-boat loading system wherein green fuel pellets discharged from a pellet press onto a rotating turntable are cammed from the latter onto a rotating transfer table and thence onto a moving conveyor directing the pellets into one of three peripherally spaced channels on a drum. The drum is rotatable about a horizontal axis so as to move each channel successively from a pellet receiving position, corresponding substantially to a 12 o'clock position of the drum, to a pellet unloading position spaced about 120 degrees from the pellet receiving position, and back to the latter. When a channel loaded with a row of pellets has arrived in the unloading position, the row of pellets is ejected therefrom onto an incline down which it slides into a sintering boat supported at the lower end thereof.

It is the principal object of the invention to provide a nuclear fuel pellet escalator which is compact, easy to operate, and capable of transferring green fuel pellets into sintering boats with a minimal risk of pellet damage.

The invention accordingly resides in a pellet escalator as defined in the appended main claim or in any of the claims subordinated thereto.

The escalator embodying the invention is compact in that it consists of but few basic component parts, namely, the pellet transfer disk, the elongate transfer conveyor having the pellet dispensing chute mounted on its pellet discharge end, and a fixture supporting the transfer disk, the conveyor, and drive means therefor. The escalator is easy to operate since, apart from the steady movement of the transfer disk and the conveying belt, the only movements to be periodically effected during normal operation are those of the transfer conveyor being swung alternately down and up for the purpose of lowering the dispensing chute into and raising it from, respectively, a sintering boat positioned therebeneath for loading. Finally, the escalator embodying the invention minimizes the risk of pellet damage because pellets are transferred onto the conveying belt smoothly and with but a slight and innocuous drop from the transfer disk into the pellet channel of the conveyor, then are transported toward the dispensing chute in single file and with virtually no risk of injurious pellet-to-pellet impact occurring, and finally are. allowed to fall through the chute at a controlled rate protecting the pellets from damage as they are being deposited in the sintering boat.

A preferred embodiment of the invention will now be described, by way of example only, with reference to the accompanying drawings, in which:
Figure 1 is a top plan view of a nuclear-fuel pellet loading apparatus employing a pellet transfer escalator according to the invention;
Fig. 2 is a side elevational view of the pellet loading apparatus of Fig. 1;
Fig. 3 is an end elevational view of the pellet loading apparatus, as seen along line 3--3 of Fig. 1;
Fig. 4 is an enlarged cross-sectional view of the pellet transfer escalator of the loading apparatus, as taken along line 4--4 of Fig. 2; and
Fig. 5 is an enlarged cross-sectional view of the pellet transfer escalator as taken along line 5--5 of Fig. 2.

In the following description, like reference characters designate like or equivalent parts throughout the several views of the drawings, and terms such as "forward", "rearward", "left", "right", "upwardly", "downwardly", and the like are used as words of convenience not to be construed as limiting terms.

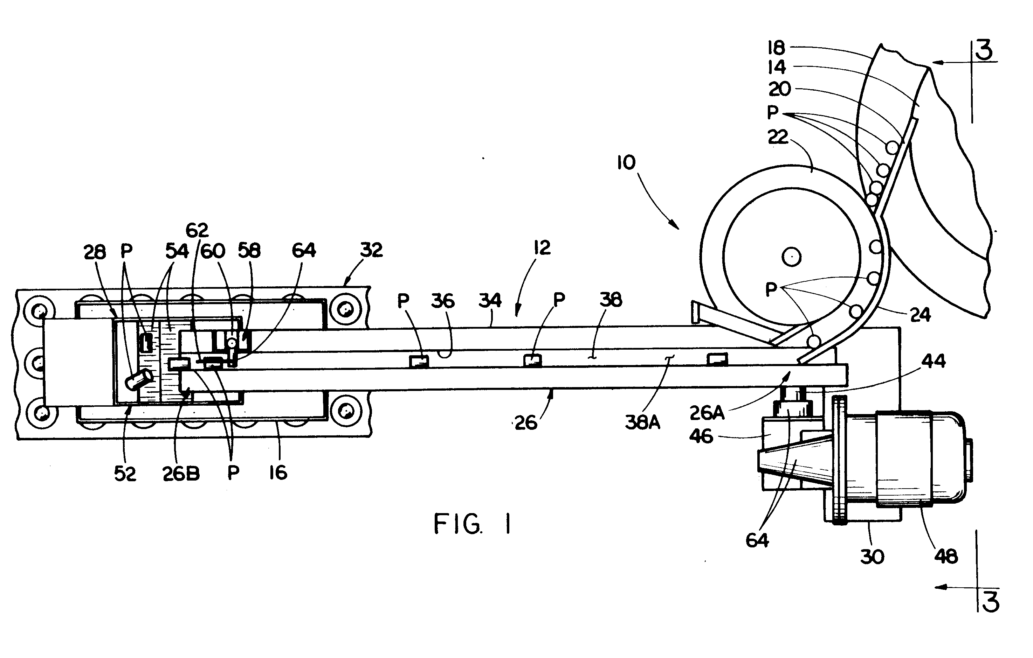

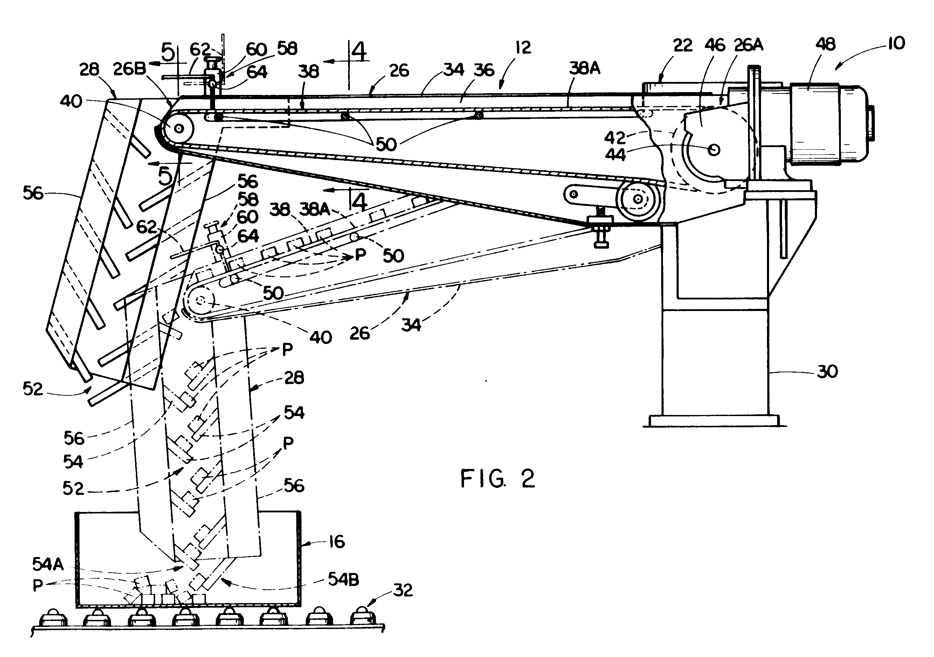

Referring now to the drawings, and particularly to Figs. 1 and 2 thereof, the pellet loading apparatus illustrated therein and generally designated with reference numeral 10 comprises basically a rotary turntable 18 on a pellet press 14 for receiving green fuel pellets P discharged from the pellet press; a transfer escalator 12 embodying the invention; and support means 32 for supporting a sintering boat 16 in a pellet loading position.

The pellet transfer escalator 12 comprises basically a transfer disk 22 rotatable about a substantially vertical axis and disposed to receive green pellets P cammed from the turntable 18 by a stationary ejector arm 20; an elongate transfer conveyor 26 for receiving pellets P cammed from the transfer disk 22 by a stationary ejector arm 24; a pellet dispensing chute 28 supported from the conveyor 26 in pellet receiving relationship therewith and extending therebelow; and a stationary fixture or base 30 supporting the transfer disk 22, the transfer conveyor 26, and drive means 42,46,48 for the disk and the conveyor.

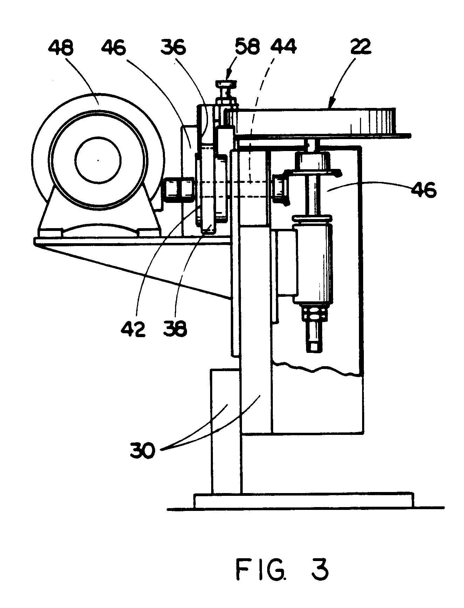

More particularly, and as seen from Figs. 1, 2 and 3, the elongate transfer conveyor 26 is disposed generally horizontally, and it is supported, at its receiving end 26A, cantilever-like from the stationary base 30 in a manner such as to be pivotally movable about a generally horizontal axis, thereby to enable the dispensing chute 28 to be lowered into and raised from the sintering boat 16 positioned therebeneath, as illustrated in Fig. 2. Preferably, the means 32 for supporting each sintering boat 16 in the loading position is a roller-bearing type conveyor 32 located generally at floor level, the advantage of such roller-bearing type conveyor being that it will facilitate moving the sintering boat 16, either manually or automatically, relative to the dispensing chute 28 in a manner causing the pellets P to be distributed evenly in the boat 16 as they are being loaded therein.

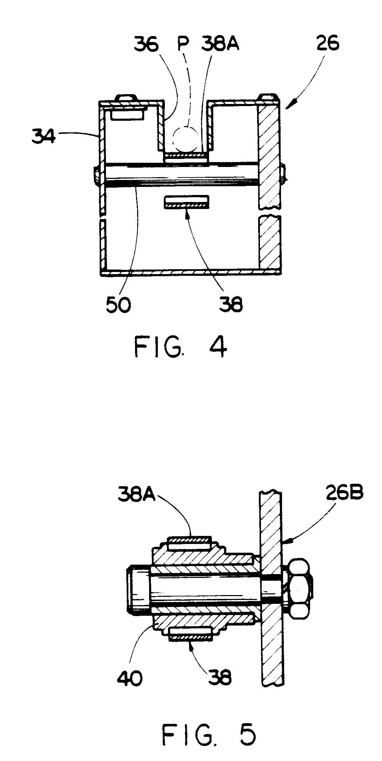

As seen from Figs. 1, 2 and 4, the transfer conveyor 26 comprises an elongate arm 34, and an endless flexible pellet conveying belt 38. The arm 34 is composed of elongate, relatively narrow plates assembled and connected together to form a hollow structure defining an elongate channel 36 which is recessed below the upper side of the arm 34 and extends longitudinally from the receiving end 26A to the discharge end 26B of the conveyor 26. As seen from Figs. 1 and 4, the channel 36 has a width sufficiently larger than the diameter of each of the pellets P to receive the latter and to enable their free movement in and along the channel, but only in single-file fashion, i.e. one behind the other.

The endless conveying belt 38 is trained about and movably supported by idler and drive pulleys 40, 42, the idler pulley 40 (see also Fig. 5) being rotatably supported in the arm 34 at the discharge end 26B of the conveyor 26, and the drive pulley 42 at the receiving end 26A of the conveyor 26 being secured to an output shaft 44 of a gear box 46 which is coupled to and adapted to be driven from a drive motor 48 mounted on the support structure 30. The transfer disk 22 which feeds pellets P to the conveying belt 38 is connected to be driven by the same motor 48 and through the same gear box 46 as the drive pulley 42 so that the speeds of the transfer disk 22 and of the conveying belt 38 are coordinated, which likewise contributes to a smooth transfer of pellets from the disk 22 onto the endless conveying belt 38.

The conveying belt 38 has an upper, generally horizontal pellet carrying run 38A supported by spaced guide bars 50 which are connected to the arm 34 and extend across its interior at a level such that the pellet carrying belt run 38A directly underlies the bottom of the channel 36. The upper belt run 38A receives pellets P, one at a time (and preferably standing on end, although they could be received also lying down lengthwise), at the receiving end 26A of the conveyor 26 and transports them in single file to the discharge end 26B thereof. The pellets on the rotating transfer disk 22 are transferred to the conveying belt 38 at a point where the conveyor arm 34 is tangent to the disk 22 and which point is proximate to the stationary horizontal axis about which the conveyor 26 is movable. Preferably, a friction clutch (not shown) or some other suitable mechanism is incorporated in the conveyor arm 34 for holding the conveyor 26 in the particular position to which it has been swung, either manually or automatically.

The dispensing chute 28 has disposed therein deflectable pellet guiding means 52 defining a non-linear or tortuous gravity feed path for the pellets to follow as they are falling through the chute, thereby preventing the pellets from accelerating and gathering enough momentum to sustain damage upon reaching the sintering boat 16. The deflectable pellet guiding means 52 comprise resiliently flexible and deflectable bristled brushes 54, made preferably of Nylon material, which are attached to the chute 28 and arranged in two vertical rows disposed opposite each other and defining the non-linear gravity feed path therebetween. The dispensing chute 28 is generally of a rectangular, hollow box-like configuration and includes a pair of oppositely spaced brush holders 56 which support the respective rows of brushes 54 so that the brushes 54 in each row are inclined downward and vertically offset with respect to the brushes 54 in the other row, thereby to control the drop rate of pellets P through the chute 28 by deflection of the brushes.

The pellet escalator 12 includes also a stop means 58 mounted, at the discharge end 26B of the conveyor 26, on the conveyor arm 34 and operable between blocking and unblocking positions for stopping or permitting, respectively, the discharge of pellets P from the conveying belt 38 into the dispensing chute 28. The stop means 58 comprises a bracket 60, and an L-shaped member 62 which is pivotally supported on the bracket by means of a shaft 64 and operable to the blocking position shown in Fig. 2 in solid lines and in which an intercepting arm of the L-shaped member extends into the channel 36 and thus into the pellet path, and to the unblocking position shown in Fig. 2 in phantom lines and in which the intercepting arm of the L-shaped member is withdrawn from the path of pellets P moving along channel 36. Upon movement of the finger 62 to its blocking position, a detent (not shown) in the bracket 60 will become effective to hold the finger 62 in its blocking position, whereupon the first pellet P riding on the conveying belt 38 and encountering the intercepting arm of the stop member 62 will be stopped and, consequently, itself will stop all pellets P following in single file on the conveying belt 38. Slippage between the intercepted pellets and the conveying belt will allow the latter to continue moving while the pellets are stopped. This pellet intercepting feature enables the discharge of pellets into the dispensing chute 28 to be interrupted for the time it takes to replace a fully loaded sintering boat with an empty one.

At the start of a pellet loading operation, and with an empty sintering boat 16 in loading position as shown in Fig. 2, the conveyor arm 34 is swung down from its extreme upper position (solid lines) to lower the dispensing chute 28 into the empty sintering boat 16, as indicated in phantom in Fig. 2. Then, with the conveying belt 38 running and the dispensing of pellets P into the sintering boat 16 proceeding, the latter is shifted on the roller-bearing type conveyor 32, and the conveyor arm 34 is gradually raised, in a manner such as to ensure that the pellets being dispensed into the sintering boat are evenly distributed therein. Once the sintering boat is filled, an an empty boat is brought alongside and the stop member 62 is flipped to its blocking position so as to interrupt the discharge of pellets into the dispensing chute 28. Then, the conveyor arm 34 is raised high enough for the dispensing chute 28 to clear the loaded sintering boat, whereupon the latter is removed from, and the empty boat is moved to, the loading position beneath the dispensing chute 28. With the empty sintering boat thus positioned to receive fuel pellets P, the conveyor arm 34 is swung down again to lower the chute 28 to its proper dispensing position relative to the empty sintering boat, and then the stop memberr 62 is returned to its unblocking position to effect resumption of the discharge of pellets from the conveying belt 38 into the dispensing chute 28.

## Claims

1. A pellet escalator (12) for loading nuclear fuel pellets (P) into a sintering boat (16), comprising:
(a) a pellet transfer disk (22) for receiving fuel pellets discharged from a pellet press, said transfer disk being rotatable about a substantially vertical axis;
(b) an elongate pellet transfer conveyor (26) having a pellet receiving end (26A) and a pellet discharge end (26B), said pellet receiving end being disposed in pellet receiving relationship with respect to said transfer disk (22), and the pellet transfer conveyor (26) being supported, at its receiving end, in cantilever fashion for angular movement about a substantially horizontal axis; and
(c) a pellet dispensing chute (28) mounted on the conveyor (26) at the discharge end (26B) thereof and extending therebelow, said dispensing chute having an upper end portion thereof disposed in pellet receiving relationship with respect to the discharge end (26B) of the conveyor, and having a lower end portion which, upon corresponding movements of the transfer conveyor (26) about said substantially horizontal axis, is lowered into and raised from, respectively, said sintering boat (16) when positioned therebeneath;
said transfer conveyor (26) comprising an elongate arm (34) defining a channel (36) which is recessed below the upper side of the arm (34) and extends from the receiving end (26A) to the discharge end (26B) of the conveyor, said channel (36) having a width sufficiently larger than the diameter of said fuel pellets (P) to receive the latter and enable their free movement in and along the channel, but only in single file; and an endless conveying belt (38) supported in said arm (34) and operable to transport fuel pellets from the receiving end (26A) to the discharge end (26B) of the transfer conveyor (26), said conveying belt having a pellet carrying run (38A) movable along the bottom of said channel (36);
said transfer disk (22) having associated therewith means (24) causing fuel pellets (P) to be transferred therefrom to the conveying belt (38) at a point where said arm (36) is tangent to the transfer disk (22) and which point is proximate to said substantially horizontal axis;
and said pellet dispensing chute (28) having disposed therein resiliently deflectable pellet guiding means (52) defining a gravity feed path which is non-linear and enables fuel pellets (P) to gravitate therealong only at a controlled rate low enough to prevent damage to the pellets upon delivery thereof into the sintering boat (16).

2. A pellet escalator according to claim 1, wherein said pellet guiding means (52) comprise a plurality of resiliently flexible and deflectable bristled brushes (54) which are arranged in two oppositely disposed vertical rows (54A, 54B) defining said non-linear gravity feed path therebetween and controling the pellet drop rate along said path through brush deflection.

3. A pellet escalator according to claim 2, wherein the brushes (54) in both rows (54A, 54B) are inclined downwardly, and the brushes (54) in one row are vertically offset from the brushes (54) in the other row.

4. A pellet escalator according to claim 2 or 3, wherein said dispensing chute (28) includes a pair of oppositely spaced brush holders (56), said rows of brushes (54A, 54B) being disposed each on one of said brush holders (56).

5. A pellet escalator according to claim 1, 2, 3 or 4, wherein said transfer conveyor (26) has a pellet stop means (58) disposed thereon at the discharge end (26B) thereof, said pellet stop means including a movable member (62) which is operable between a blocking position and an unblocking position for stopping and permitting, respectively, the discharge of fuel pellets (P) from the transfer conveyor (26) into the dispensing chute (28).

6. A pellet escalator according to claim 5, wherein said movable element (62) is generally L-shaped and pivotally supported for movement to insert a pellet intercepting portion thereof into said channel (36) and to withdraw it therefrom upon actuation of the movable member (62) to its blocking position or unblocking position, respectively.

7. A pellet escalator according to any one of the preceding claims, wherein said transfer disk (22) and said conveying belt (38) have associated therewith drive means (42, 44, 46, 48) common to both and operatively connected thereto so as to effect rotation of the transfer disk (22) and movement of the conveying belt (38) at coordinated speeds.

## Patentansprüche

1. Tablettenfördervorrichtung (12) zum Laden von Kernbrennstofftabletten (P) in einen Sinterbehälter (16), mit
a) einem Tablettenübergabeteller (22) zur Aufnahme von aus einer Tablettenpresse ausgeworfenen Brennstofftabletten, wobei der Übergabeteller um eine etwa vertikale Achse drehbar ist,
b) einen länglichen Tablettenübergabeförderer (26) mit einem Tablettenaufnahmeende (26A) und einem Tablettenabgabeende (26B), wobei das Tablettenaufnahmeende in Tablettenaufnahmeverbindung mit dem Übergabeteller (22) steht, und wobei der Tablettenübergabeförderer (26) an seinem Aufnahmeende freitragend für eine Schwenkbewegung um eine etwa horizontale Achse angeordnet ist, und
c) einer Tablettenauswurfrinne (28), die am Abgabeende (26B) des Förderers (26) montiert ist und nach unten verläuft, und die mit ihrem oberen Endteil in Tablettenaufnahmeverbindung zum Abgabeende (26B) des Förderers steht und mit ihrem unteren Endteil bei entsprechenden Bewegungen des Übergabeförderers (26) um die genannte etwa horizontale Achse bei entsprechender Positionierung in den Sinterbehälter (16) absenkbar bzw. aus diesem anhebbar ist,
wobei der Übergabeförderer (26) einen länglichen Arm (34) aufweist, der eine Rinne (36) bildet, die unterhalb der Oberseite des Arme (34) vertieft ist und vom Aufnahmeende (26A) zum Abgabeende (26B) des Fördereres verläuft und eine Breite hat, die ausreichend größer als der Durchmesser der Brennstofftabletten (P) ist, um diese aufzunehmen und ihre freie Beweglichkeit in und entlang der Rinne, jedoch nur in einer einzigen Reihe, zu ermöglichen, und ein in dem Arm (34) geführtes Endlosförderband (38) aufweist, das im Sinne eines Transports der Brennstofftabletten vom Aufnahmeende (26A) zum Abgabeende (26B) des Übergabeförderers (26) betreibbar ist und ein entlang der Unterseite der Rinne (36) bewegliches tablettenführendes Trum (38A) aufweist,
wobei weiter der Übergabeteller (22) mit Mitteln (24) versehen ist, welche die Übergabe von Brennstofftabletten (P) vom Teller auf das Förderband (38) an einer Stelle bewirken, an welcher der Arm (36) tangential zum Übergabeteller (22) verläuft und der nahe der genannten etwa horizontalen Achse liegt,
und wobei die Tablettenauswurfrinne (28) darin angeordnete elastisch auslenkbare Tablettenführungsmittel (52) aufweist, die eine Schwerkraftzuführbahn bilden, die nichtgeradlinig verläuft und das Hindurchfallen von Brennstofftabletten (P) mit einer gesteuerten, genügend langsamen Geschwindigkeit ermöglichen, damit eine Beschädigung der Tabletten beim Auswurf in den Sinterbehälter (16) vermieden wird.

2. Tablettenfördervorrichtung nach Anspruch 1, wobei die Tablettenführungsmittel (52) eine Mehrzahl elastisch flexibler und auslenkbarer, aus Borsten bestehenden Bürsten (54) aufweist, die in zwei einander gegenüberliegenden vertikalen Reihen (54A, 54B) angeordnet sind und zwischen sich die genannte nichtgeradlinige Schwerkraftzuführbahn bilden und die Tablettenausfallgeschwindigkeit entlang dieser Bahn durch die Auslenkung der Bürsten steuern.

3. Tablettentransportvorrichtung nach Anspruch 2, wobei die Bürsten (54) in beiden Reihen (54A, 54B) nach unten geneigt sind und die Bürsten (54) in einer Reihe vertikal gegenüber den Bürsten (54) in der anderen Reihe versetzt sind.

4. Tablettentransportvorrichtung nach Anspruch 2 oder 3, wobei die Auswurfrinne (28) zwei mit Abstand gegenüberliegende Bürstenhalter (56) aufweist und die genannten Bürstenreihen (54A, 54B) jeweils an einem dieser Bürstenhalter (56) angeordnet sind.

5. Tablettentransportvorrichtung nach Anspruch 1, 2, 3 oder 4, wobei der Übergabeförderer (26) ein an seinem Ausgabeende (26B) angeordnetes Tablettenanschlagorgan (58) aufweist, welches ein bewegliches Teil (62) aufweist, das zwischen einer Blockierposition und einer Freigabeposition zum Stoppen bzw. Zulassen der Abgabe von Brennstofftabletten (P) von dem Übergabeförderer (26) in die Auswurfrinne (28) betätigbar ist.

6. Tablettentransportvorrichtung nach Anspruch 5, wobei das bewegliche Teil (62) etwa L-förmig ausgebildet und schwenkbar gehaltert ist, um bei Betätigung des beweglichen Teils (62) in seine Blockierposition bzw. seine Freigabeposition einen Tablettensperrteil in die Rinne (36) einzuführen bzw. aus dieser zurückzuziehen.

7. Tablettenfördervorrichtung nach einem der vorhergehenden Ansprüche, wobei dem Übergabeteller (22) und dem Förderband (38) Antriebsmittel (42, 44, 46, 48) zugeordnet sind, die beiden gemeinsam und wirkungsmäßig so miteinander verbunden sind, daß sie eine Drehung des Übergabetellers (22) und eine Bewegung des Förderbands (38) mit koordinierten Geschwindigkeiten bewirken.

## Revendications

1. Dispositif de transport de pilules (12) pour charger des pilules de combustible nucléaire (P) dans un récipient de frittage (16), avec
a) un disque de transfert des pilules (22) pour la réception des pilules de combustible déchargées par une presse à pilules, le disque de transfert pouvant être tourné autour d'un axe substantiellement vertical,
b) un transporteur de transfert des pilules (26) allongé avec une extrémité de réception des pilules (26A) et une extrémité de déchargement des pilules (26B), l'extrémité de réception des pilules étant raccordée au disque de transfert (22) de manière à recevoir les pilules, et le transporteur de transfert des pilules (26) étant disposé en porte-à-faux en son extrémité de réception pour permettre un mouvement de basculement autour d'un axe substantiellement horizontal, et
c) une rigole de déchargement des pilules (28) qui est montée à l'extrémité de déchargement (26B) du transporteur (26) et s'étend vers le bas et qui, par son extrémité supérieure, est raccordée à l'extrémité de déchargement (26B) du transporteur de manière à recevoir les pilules et qui, par son extrémité inférieure, peut être abaissée et relevée dans le récipient de frittage (16) et hors de celui-ci par des mouvements correspondants du transporteur de transfert (26) autour dudit axe substantiellement horizontal et un positionnement correspondant,
le transporteur de transfert (26) présentant un bras allongé (34) qui forme une rigole (36) qui est renfoncée au-dessous du côté supérieur du bras (34) et s'étend de l'extrémité de réception (26A) à l'extrémité de déchargement (26B) du transporteur et présente une largeur qui est suffisamment plus grande que le diamètre des pilules de combustible (P) pour recevoir ces dernières et leur permettre un mouvement libre dans et le long de la rigole, toutefois seulement en une seule rangée, et une bande transporteuse (38) sans fin guidée dans le bras (34) qui peut être actionnée pour le transport des pilules de combustible de l'extrémité de réception (26A) à l'extrémité de déchargement (26B) et qui présente un brin (38A) le long de la face inférieure de la rigole (36) mobile et transportant les pilules,
le disque de transfert (22) étant pourvu de moyens (24) qui provoquent le transfert des pilules de combustible (P) du disque sur la bande transporteuse (38) en un endroit où le bras (36) s'étend tangentiellement par rapport au disque de transfert (22) et qui se trouve à proximité dudit axe substantiellement horizontal,
la rigole de déchargement des pilules (28) présentant des moyens de guidage des pilules (52) disposés dans la rigole et pouvant être déflectés élastiquement, qui forment une voie d'alimentation sous l'effet de la pesanteur, qui ne s'étend pas en ligne droite et qui permet la chute des pilules de combustible (P) à une vitesse commandée suffisamment lente pour que les pilules ne soient pas endommagées lors de leur déchargement dans le récipient de frittage (16).

2. Dispositif de transport de pilules selon la revendication 1, dans lequel le moyen de guidage des pilules (52) présente une pluralité de brosses (54) consistant en soies, élastiques, flexibles et déflectables, qui sont disposées en deux rangées (54A, 54B) verticales se faisant face et forment entre elles ladite voie d'alimentation sous l'effet de la pesanteur, non-rectiligne, et commandent la vitesse de précipitation des pilules le long de cette voie par la déflexion des brosses.

3. Dispositif de transport de pilules selon la revendication 2, dans lequel les brosses (54) en deux rangées (54A, 54B) sont inclinées vers le bas, et les brosses (54) sont décalées verticalement par rapport aux brosses (54) de l'autre rangée.

4. Dispositif de transport de pilules selon les revendications 2 ou 3, dans lequel la rigole de déchargement (28) présente deux porte-brosses (56) décalés et opposés, et lesdites rangées de brosses (54A, 54B) sont chacune disposées sur un de ces porte-brosses (56).

5. Dispositif de transport de pilules selon les revendications 1, 2, 3 ou 4, dans lequel le transporteur de transfert (26) présente à sa sortie de déchargement (26B) un organe de butée pour les pilules (58) qui est pourvu d'une pièce mobile (62) qui peut être actionnée entre une position de blocage et une position de déblocage pour arrêter et admettre le déchargement des pilules de combustible (P) du transporteur de transfert (26) dans la rigole de déchargement (28).

6. Dispositif de transport de pilules selon la revendication 5, dans lequel la pièce mobile (62) a substantiellement la forme d'un L et est tenue de manière à pouvoir pivoter pour que, lors de l'actionnement de la pièce mobile (62) dans sa position de blocage ou sa position de déblocage, une pièce de blocage des pilules soit introduite ou retirée de la rigole (36).

7. Dispositif de transport de pilules selon l'une quelconque des revendications précédentes, dans lequel le disque de transfert (22) et la bande transporteuse (38) sont associés à des moyens d'entraînement (42, 44, 46, 48) qui sont communs à tous deux et sont connectés ensemble de manière à ce qu'une rotation du disque de transfert (22) et un mouvement de la bande transporteuse (38) se fassent à vitesses coordonnées.
